# EUROPÄISCHE PATENTSCHRIFT

(11) **EP 0 826 520 B1**
(45) Veröffentlichungstag und Bekanntmachung des Hinweises auf die Patenterteilung: **09.10.2002**
(21) Anmeldenummer: 97114300.3
(22) Anmeldetag: 19.08.1997
(51) Int. Cl.: B60B 7/00, B60B 7/06, B60B 7/08

(54) **Abdeckung von Fahrzeugrädern mit Leichtmetallfelgen während eines längeren Transportes**
Covering of vehicle wheels with light metal rims during long duration transport
Couverture de roues de véhicule avec jantes en alliage léger pendant un transport de longue durée

(30) Priorität: 27.08.1996 DE 19634508
(43) Veröffentlichungstag der Anmeldung: 04.03.1998
(73) Patentinhaber: DaimlerChrysler AG, 70567 Stuttgart (DE)
(72) Erfinder: Passoth, Half, 72181 Starzach (DE); Hagner, Hans, 72280 Dornstetten (DE)

(56) Entgegenhaltungen:
- EP-A- 0 531 892
- EP-A- 0 773 114
- GB-A- 1 506 876
- US-A- 4 707 035
- US-A- 5 039 172
- US-A- 5 423 599

## Beschreibung

Die Erfindung geht aus von einer Abdeckung von Fahrzeugrädern mit Leichtmetallfelgen während eines längeren Transportes nach dem Oberbegriff von Anspruch 1, wie sie beispielsweise aus der serienmäßigen Anwendung von manchen Fahrzeugherstellern bekannt ist.

Viele Kunden bestellen ihr Fahrzeug mit Leichtmetallfelgen. Wegen der guten Akzeptanz dieses Ausstattungsteils bei den Kunden halten viele Fahrzeughersteller eine Auswahl unterschiedlicher Designs von Leichtmetallfelgen im Angebot bereit. Leichtmetallfelgen unterscheidet sich gegenüber herkömmlichen Stahlfelgen, insbesondere gegenüber radkappen-bestückten Stahlfelgen durch eine größere Offenheit im Bereich der Radscheibe. Diese Offenheit hat neben dem Vorteil einer guten Bremsenbelüftung den Nachteil, daß die hinter der Radscheibe liegende Bremsscheibe während des Transportes von Fahrzeugen, insbesondere auf Übersee-Transporten, einer Bewetterung durch salzhaltige Luft ausgesetzt ist. Diese Salzluft-Bewetterung ist nicht nur beim Abstellen der Fahrzeuge im Hafengebiet durch den Seewind gegeben, sondern auch auf dem Schiff, weil die Frachträume wegen der Kraftstoffausdünstungen der Fahrzeuge gut - mit Seeluft - belüftet werden. Die Bewetterung hat zur Folge, daß die Bremsscheiben der lange stillstehenden Fahrzeuge im freiliegenden Bereich anrosten, im Bereich des Bremssattels, wo sie vor Zutritt von salzhaltiger Luft geschützt sind, jedoch blank bleiben. Zwar wird der Rostbelag sehr schnell bei Inbetriebnahme des Fahrzeuges durch den normalen Bremsvorgang abgerieben, jedoch kann es in Fällen einer starken lokalen Anrostung der Bremsscheibe zu leichten Dickenunterschieden der Bremsscheibe und demgemäß zu einem unerwünschten Bremsrubbeln kommen. Diese Erscheinung hat man hauptsächlich bei offenen Leichmetallfelgen, und dort nur auf der Außenseite beobachtet. Die Innenseite der Bremsscheibe ist gegen den Zutritt von salzhaltiger Luft durch das meist ohnehin vorhandene Spritzblech und durch das Fahrzeug selber geschützt; auf den Innenseiten der Bremsscheiben hat man deshalb keine nennenswerten Anrostungen beobachtet.

Bei radkappen-bestückten Stahlfelgen kann - wenn die Stalfelgen und die Radkappen luftdurchlässig sind - die Bremsscheibe dadurch auf einfache und wirksame Weise geschützt werden, indem für Transportzwecke die Radkappe unter Zwischenfügung einer Kunststoff-Folie auf das Rad aufgeklipst wird. Bei der Folie kann es sich um eine ohnehin vom Hersteller der Radkappen als Verpackung der Radkappen mitgelieferten Folienbeutel handeln; Die Radkappen werden praktisch mitsamt ihrer Folienverpackung auf das Rad geklipst, so daß praktisch kein Mehraufwand für den Bremsscheibenschutz erforderlich wird.

Bei Leichtmetallfelgen ist jedoch eine gesonderte Transportabdeckung zum Schutz gegen außenseitige Anrostungen der Bremscheibe erforderlich. Die Möglichkeit einer Folienabdeckung ist bei Leichtmetallrädern nur durch ein umständliches Bekleben der Räder mit einer selbstklebenden Kunststoff-Folie realisierbar. Hierbei fällt kostenmäßig zum einen der Verbrauch an selbstklebenden UV-beständiger Folie, und zum anderen der Zeitaufwand für das Rundschneiden der Folie und das möglichst blasenfreie manuelle Applizieren der Folie auf die bereits am Fahrzeug befindlichen Fahrzeugräder ins Gewicht. Es ist hier nämlich zu berücksichtigen, daß die selbstklebende Folie sich auch nach längerem Stehen des Fahrzeuges in der Sonne problemlos und rückstandsfrei wieder von der Felge entfernen lassen muß.

Einige Fahrzeughersteller fügen zum Schutz der Bremsscheibe einen eigensteifen glockenförmigen Folienformkörper zwischen die Bremsscheibe und das Fahrzeugrad ein, der die Außenseite der Bremsscheibe und den Bremssattel im Abstand übergreift. Er muß sich mit dem Rad und der Bremsscheibe am feststehenden Bremssattel behinderungsfrei vorbeidrehen lassen, damit das Fahrzeug noch fahrbereit bleibt. Dieser Folienformkörper bietet zwar einen guten Schutz gegen Anrostungen der Bremsscheibe während Überseetansporten, erfordert jedoch sowohl beim Anbringen als auch beim Entfernen des Schutzkörpers aufwendige Montagearbeiten, weil jedes mal die Fahrzeugräder demontiert und wiedere montiert werden müssen und das Fahrzeug dazu aufgebockt werden muß. Dies bindet Personal und Werkstattkapazität.

So zeigt die US 4,707,035 eine Felgenüberdeckung aus Kunstoff, die mit Rippen versteifte, horizontale Abkragungen aufweist. Diese Abkragungen werden über die Schraubenmuttern der Felge geschoben bzw. zwischen den Felgenhörnern verspannt. Dabei ist sowohl die konstruktive Ausbildung der Einrichtung zum Verspannen, wie auch das Verspannen selbst kompliziert.

Die gattungsbildende US 5,423,599 beschreibt eine temporäre Abdeckung einer Autofelge durch einen eigensteifen Kunststofformkörper, der das Felgenhorn übergreift und an diesem angeordnet ist. Diese Halterung ist primär nur für kurzzeitige Anwendungen gedacht und wegen der fehlenden Haltesicherheit nur unzureichend geeignet, an zu bewegenden Fahrzeugen eingesetzt zu werden.

Aufgabe der Erfindung ist es, die gattungsgemäß zugrundegelegte Felgenabdeckung dahingehend zu verbessern, daß sie nicht nur kostengünstig ist, sondern vor allem unabhängig vom Felgendesign und bei gleicher Ausführung der Abdeckung für unterschiedliche Felgendesigns leicht anzubringen ist, trotzdem aber sicher am Fahrzeugrad haftet und ebenso leicht wieder demontierbar ist.

Diese Aufgabe wird erfindungsgemäß durch die kennzeichnenden Merkmale von Anspruch 1 gelöst. Aufgrund der zentrischen Verkrallung der als geschlossener Folienformkörper ausgebildeten Abdeckung mittels Befestigungsnoppen an den Radschrauben/-muttern bzw. den entsprechenden Ansenkungen ist nicht nur eine einfache manuelle und rasche Montage oder Demontage der Abdeckung möglich, sondern es kommt auch ein sicherer Halt der Abdeckung am Fahrzeurad zustande, so daß auch während des Fahrens und/oder bei starkem Seitenwind die Abdeckungen fest am Rad haften bleiben. Nachdem der Schraubenkranz für die Radbefestigungsschrauben erfahrungsgemäß bei fast allen Fahrzeugtypen eines bestimmten Fahrzeugherstellers auch über die verschiedenen Fahrzeuggegerationen hinweg nach Anzahl und Größe der Schrauben und bezüglich des Teilkreisdurchmessers stets gleich ausgebildet ist, können bei einer Schraubenkranz-Verklipsung der Radabdeckungen diese bei allen Typen von Leichtmetallfelgen, Fahrzeugtypen und Fahrzeug- bzw. Felgengenerationen eines Fahrzeugherstellers verwendet bzw. unverändert beibehalten werden. Wegen der leichteren Handhabbarkeit des Folienformkörpers bei der Applikation, weil ferner notfalls auch ein vorübergehendes Wiedereabnehmen der Abdeckung - z.B. zum Nachfüllen von Reifenluft - ohne weiteres möglich ist und weil schließlich die Abdeckung auch nach längerem Gebrauch rasch und rückstandsfrei entfernbar ist, fällt sie insgesamt kostengünstiger aus als beispielsweise eine Abdeckung mittels selbstklebender Folie.

Das Vorsehen von aus dem Boden des Formkörpers geformten Noppen sowie in die Noppen eingeformter Einstülpungen, führt einerseits zu einer höheren Stabilität bei einem einteilig herstellbaren Bauteil und anderseits zu einer hohen Flexibilität bei der Anpassung an verschiedene Schraubenköpfe oder Schraubenmuttern.

Zweckmäßige Ausgestaltungen der Erfindung können den Unteransprüchen entnommen werden; im übrigen ist die Erfindung anhand eines in der Zeichnung dargestellten Ausführungsbeispieles nachfolgend noch erläutert; dabei zeigen:
- Fig. 1: einen Querschnitt durch ein Fahrzeugrad mit Leichtmetallfelge, mit Scheibenbremse und mit einer außenseitigen Abdeckung der Leichtmetallfelge mittels eines Folienformkörpers, der in die Ansenkungen der Radschrauben mittels Befestigungsnoppen aufklipsbar ist,
- Fig. 2: eine axiale Ansicht auf einen Folienformkörper nach Figur 1 in Einzeldarstellung und
- Fig. 3: eine vergrößerte Querschnittdarstellung einer Befestigungsnoppe mit einer an den Schraubenkopf angepaßten Einstülpung gemäß der Schnittlinie III-III von Figur 2.

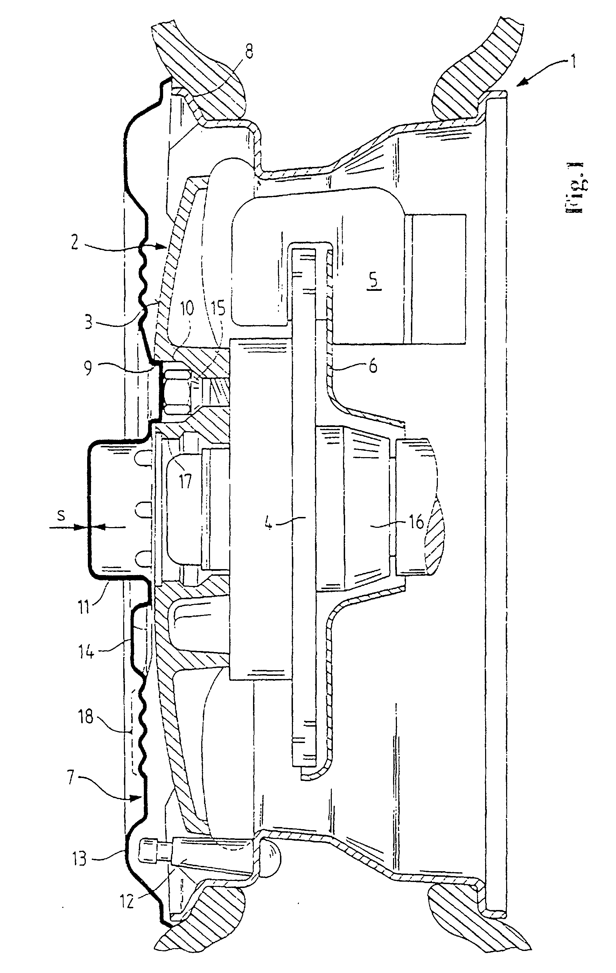

Das in Figur 1 im Querschnitt partiell dargestellte Fahrzeugrad 1 weist eine Leichtmetallfelge 2 auf, die außen mit einem teilweise gezeigten Reifen bestückt ist, dessen Reifenwülste an den Felgenhörnern 8 anliegen. An einer Umfangsstelle der Felge ist ein Füllventil 12 angebracht, welches geringfügig die Außenseite 3 des Rades überragt. Die Felge 2 ist mittels Radschrauben 15 an einem hier nicht erkennbaren Flansch der drehbar gelagerten Radnabe 16 angeschraubt. Die Köpfe der Radschrauben liegen außenseitig vertieft in einer zylindrischen Ansenkung 10 des Radkörpers. An dem erwähnten Radnabenflansch ist auch - mittels anderer Schrauben - die mit dem Rad 1 umlaufende, hutförmige Bremsscheibe 4 befestigt, so daß der Radnabenflansch im Inneren des hutförmigen Nabenbereiches der Bremsscheibe zu liegen kommt und von ihr überdeckt ist. An einer Umfangsstelle der Bremsscheibe 4 - meist oben - ist der ortsfest gehalten Bremssattel 5 mit den Bremsklötzen und dem Anpreßkolben dafür in der Weise angeordnet, daß der Bremssattel alle einfederungsbedingten Radbewegungen mitvollführt und in konstanter Relativlage zum Rad gehalten wird. Auf der radabgewandten, d.h. zur Fahrzeugmitte hin weisenden Innenseite der Bremsscheibe ist eine Spritzschutzscheibe 6 gleichfalls in konstanter Relativlage zur Bremsscheib 4 gehalten, die diese außerhalb des Bremssattels in dichtem Abstand übergreift und sie vor Schwallwasser, Schmutz- oder Schneematschspritzern seitens des gegenüberliegenden Fahrzeugrades schützt. Diese Spritzschutzscheibe 6 schützt die Innenseite der Bremsscheibe natürlich auch auf Übeseetransporten vor dem ungehinderten Zutritt von salzhaltiger Luft und somit vor Korrossion auf dieser Seite.

Hingegen ist die gegenüberliegende, nach außen weisende Seite der Bremsscheibe nicht durch die Leichtmetallfelge gegen Zutritt von salzhaltiger Luft währen eines Überseetransportes geschützt, weil zumindest Leichtmetallfelgen im allgemeinen eine größere Offenheit im Bereich der Radscheibe aufweisen.

Um auch die nach außen weisende Seite der Bremsscheibe unabhängig vom Felgendesign gegen eine Bewetterung durch salzhaltige Luft wirksam zu schützen, ist während des Transportes die nach außen weisende Seite 3 des Fahrzeugrades 1 mit einer geschlossenen, am Rad befestigten Kunststoff-Folie überdeckt. Diese Abdeckung soll bei gleicher Ausführung für unterschiedliche Felgendesigns leicht anbringbar sein, trotzdem einen sicheren Halt am Fahrzeugrad bieten und ebenso leicht wieder demontierbar sein.

Zu diesem Zweck ist die außenseitige Radabdeckung erfindungsgemäß als einen eigensteifer, geschlossener Folienformkörper 7 von runder Außenkontur ausgebildet, der die Außenseite 3 der Leichtmetallfelge 2 bis über das Felgenhorn 8 flächendeckend übergreift. Er ist zentrisch am Fahrzeugrad 1 mittels in den Folienformkörper eingeformter Befestigungsnoppen 9 verkrallt. Bei dem in Figur 1 dargestellten Ausführungsbeispiel sind die zylindrischen Befestigungsnoppen 9 nach Anzahl, Lage und Form an die in den Felgen vorgesehen zylindrischen Ansenkungen 10 der Radschrauben angepaßt. Die Befestigungsnoppen 9 sind unter Vorspannung in die Ansenkungen 10 eingepreßt und halten den Folienformkörper selbst während des Fahrens und/oder bei starkem Seitenwind von der Innenseite her sicher am Fahrzeugrad fest.

Bedarfsweise, d.h. bei über die Außenseite 3 überstehenden Radschraubenköpfen ist anstelle einer Verkrallung der Befestigungsnoppen mit den Schraubenkopf-Ansenkungen bei entsprechend anderer Formgebung der Befestigungsnoppen eine Verklipsung auch allein mit den Radschraubenköpfen möglich, wobei in diesem Fall die Befestigungsnoppen zur Außenseite des Folienfomkörpers hin ausgeformt und mit ihrer Innenkontur an den Schraubenkopf angepaß sein müßten. Abgesehen von einer gewissen Durchmesseranpassung an die Größe des Schraubenkopfes braucht jedoch die - sechseckige - Querschnittsform des Schraubenkopfes bei der Formgebung dieser Befestigungsnoppen ebensowenig berücksichtigt zu werden wie die Drehstellung des Schraubenkopfes, weil beim Applizieren des Folienformkörpers auf das Fahrzeugrad der runde Befestigungsnoppen unter Verformung und unter Vorspannung hutförmig auf den Schraubenkopf aufgesetzt werden würde.

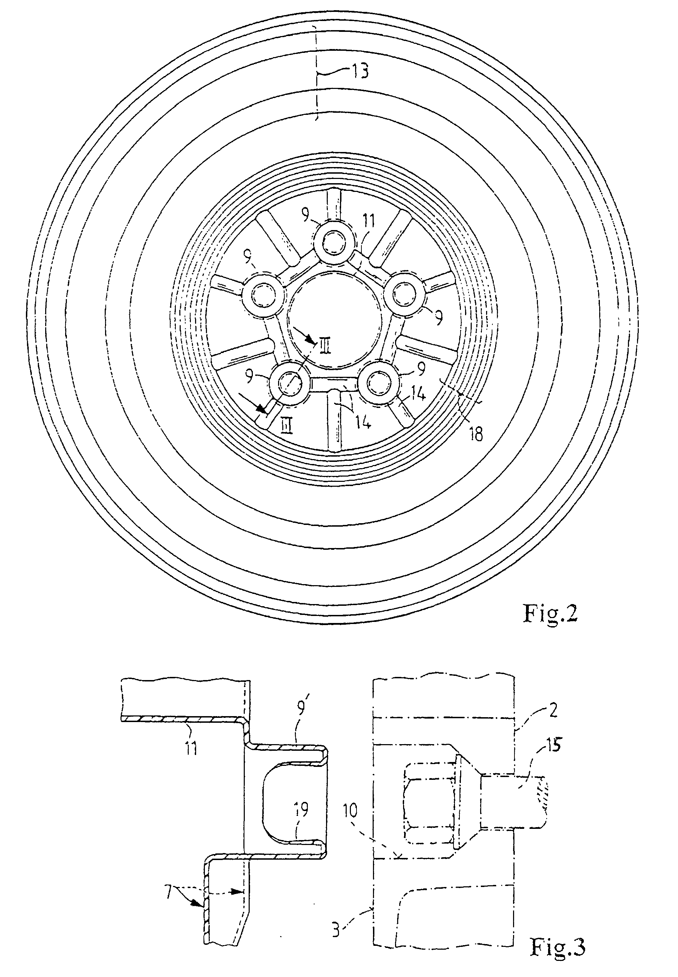

Wie die Figur 3 zeigt, können solche nach außen ausgeformten und mit ihrer Innenkontur an den Schraubenkopf angepaßten Befestigungsnoppen auch aus dem Boden eines zur Radseite des Folienformkörpers hin ausgeformten Noppens 9' gebildet sein. Dort ist aus dem Boden eines jeden Noppens innenseitig jeweils eine Einstülpung 19 geformt, die an den vertieft liegenden Kopf der Radschraube 15 angepaßt und mit dem Schraubenkopf verrastbar ist. Die Ausstülpung 19 wird zwar zur Mitte hin in ihrer Wandstärke immer dünner, was dadurch zustandekommt, daß die Folie an dieser Stelle besonders stark gedehnt ist, jedoch vermag auch die dünnwandige Ausstülpung das Folienformteil sicher an den Schraubenköpen zu verkrallen. Die Ausgestaltung nach Figur 3 ist dann von Vorteil, wenn die Radschrauben nicht in einer zylindrischen, sondern in einer konischen Ansenkung oder in einer flachen Mulde angeordnet sind, in der ein zylindrischer Noppen 9' keinen Halt finden kann. Bei der Anmelderin sind verschieden gestaltete Leichtmetallfelgen mit zylindrischen, konischen und muldenförmigen Ansenkungsformen im Angebot enthalten. Damit an allen Felgentypen ein und derselbe Folienformkörper festhaftend angebracht werden kann, werden die versenkt liegenden Köpfe der Radschrauben ausgenutzt, um den Folienformkörper zu befestigen.

Bei einer häufig vorkommenden zylindrischen Ansenkung 10 ist es trotz Halterung des Folienformteiles über die Einstülpung 19 an den Schraubenköpfen durchaus sinnvoll, den Befestigungsnoppen gleichwohl auch an die Ansenkung 10 anzupassen, weil dadurch zusätzlich eine weitere Verklammerung an der Ansenkung geschaffen wird, was sich haltekraftsteigernd auswirkt.

Zwar wäre es durchaus denkbar, den Folienformkörper zentrisch in einer meist in Leichtmetallfelgen - so auch beim dargestellte Ausführungsbeispiel - vorhandenen mittigen Öffnung 17 mittels eines einzigen, formangepaßten, zentrischen Befestigungsnoppens mit der Felge zu verrasten. Jedoch ist zum einen diese Öffnung nicht bei allen Felgentypen und/oder bei allen Felgengenerationen gleich ausgebildet und zum anderen ist diese Öffnung häufig durch einen eingeklipsten Deckel verschlossen, der das Firmenemblem des Fahrzeugherstellers trägt.

In jedem der diskutierten Fällen ist zu empfehlen, den Folienformkörper 7 aus einer Hartfolie aus thermoplastischem Kunststoff, z.B. auch aus einem Recyclat-Kunststoff herzustellen. Erste Exemplare des Folienformkörpers der Anmelderin wurden aus Polyethylenterephthalat (PET) hergestellt. Auch Polypropylenfolien (PP) oder Polystyrol (PS) können erfolgversprechend eingesetzt werden. Die Wandstärke s des Folienformkörpers beträgt 0,3 mm bis 1,5 mm, vorzugsweise etwa 0,5 mm, womit er eine gewisse Eigenstabilität besitzt. Diese Wandstärke ist in den Figuren 1 und 3 übertrieben groß dargestellt.

Zum Herstellen des Folienformkörpers wird die bekannte und verbreitete Technik des Folientiefziehens eingesetzt, bei der ein Zuschnitt eines flachen Folienmaterials zum Handhaben randseitig in einen Rahmen oder endlos umlaufende Nadelketten eingespannt bzw. aufgenadelt, durch Strahlungserwärmung auf Umformtemperatur erwärmt, auf ein luftdurchlässiges Formgebungswerkzeug aufgelegt wird und die zwischen Werkzeugoberfläche und erweichter Folie verbleibenden Zwickelräume evakuiert werden, so daß sich die Folie konturtreu an die formgebende Werkzeugoberfläche anschmiegt. In diesem Zustand wird unter Aufrechterhaltung des Vakuums der geformte Werkstück-Rohling abgekühlt und kann danach entformt und aus der Randeinspannung gelöst werden. Anschließend muß noch der Rand beschnitten werden und der Folienformkörper ist fertig.

Um den Folienformkörper nicht nur vor und beim Anbringen an das Fahrzeugrad gut und sicher handhaben zu können, sondern um ihn auch nach Gebrauch vom Rad rasch abziehen zu können, ist zentrisch in dem Folienformkörper 7 innerhalb des Kranzes von Befestigungsnoppen eine Handhabe 11 angeformt, die beim dargestellten Ausführungsbeispiel in Form eines mittig von dem Folienformkörper abragenden Domes ausgebildet ist. Im zentrumsnahen Bereich des Folienformkörpers 7, d.h nahe bei den Befestigungsnoppen 9, ist der Folienformkörper durch eingeformte peripher und radial verlaufende Sicken 14 ausgesteift. Im radialen Bereich des Füllventiles 12 des Fahrzeugrades 1 ist eine ringförmige, nach außen gewölbte, Rille 13 in den Folienformkörper eingeformt, die das Füllventil 12 übergreift. Dadurch kann der Abdeckkörper auch im Ventilbereich geschlossen gehalten werden und eine Rücksichtnahme auf die Ventilstellung des Rades ist beim Applizieren der Abdeckung nicht erforderlich. In einem radialen Bereich zwischen den Befestigungsnoppen 9 bzw. den Versteifungssicken 14 einerseits und der das Füllventil 12 übergreifende Rille 13 andererseits sind mehrere konzentrisch verlaufende Ringsicken 18 in den Folienformkörper 7 eingeformt, die radial unmittelbar benachbart sind und die der Wandung einen sinusähnlichen oder zickzackförmigen Querschnittsverlauf geben. Dadurch erhält die Scheibe des Abdeckkörpers eine gewisse Elastizität in Axialrichtung, so daß sie ohne große Eigenverspannung unterschiedlichen Radaufwölbungen zu folgen vermag. Somit können Felgen mit unterschiedlichem Design, insbesondere mit unterschiedlich starker Wölbung der Außenseite 3 mit demselben Folienformkörper sicher abgedeckt werden.

Durch den Folienformkörper wird nicht nur die Bremsscheibe gegen Korrosion, sondern selbstverständlich auch die Leichtmetallfelge selber gegen Transprortanschmutzungen geschützt. Es ist hierbei daran zu denken, daß das Fahrzeug u.U. per Bahn und/oder per Straßenfahrzeug über große Entfernungen frei auf dem Transportfahrzeug stehend befördert wird und während dieser Fahrt sich Straßenstaub, Flugnässe u.dgl. an das Fahrzeug anlagern. Aufgrund der Radabdeckung kommt die Leichtmetallfelge jedoch auch nach einem längeren Transport unter ungünstigen Witterungsbedingungen sauber unter der Abdeckung heraus.

## Patentansprüche

1. Abdeckung von Fahrzeugrädern (1) mit Leichtmetallfelgen (2) während eines längeren Transportes, bei der die nach außen weisende Seite (3) der Fahrzeugräder mit einer geschlossenen, am Rad befestigten Kunststoff-Folie überdeckt ist, mit einem eigensteifen, runden, geschlossenen Folienformkörper, der die Außenseite der Leichtmetallfelge bis über das Felgenhorn (8) flächendeckend übergreift und der zentrisch am Fahrzeugrad angeordnet ist,
**dadurch gekennzeichnet,**
**dass** der Folienformkörper (7) mittels in diesen eingeformten Befestigungsnoppen (9) mit einem Boden, die nach Anzahl, Lage und Form an versenkt liegende Radschrauben bzw. -muttern selber oder an die dafür in den Felgen vorgesehen Ansenkungen (10) angepasst sind, auf die Radschrauben (15) bzw. -muttern unter Vorspannung aufgepresst und/oder in die entsprechenden Ansenkungen (10) eingepresst ist, wobei die an die Köpfe bzw. Muttern der Radschrauben (15) angepassten und auf diese aufpressbaren Befestigungsnoppen jeweils in Form einer Einstülpung (19) ausgebildet sind, die aus dem Boden der in Richtung zum Fahrzeugrad vom Folienformkörper abragenden Noppen (9') geformt sind und innerhalb des Noppens (9') liegen.

2. Abdeckung nach Anspruch 1,
**dadurch gekennzeichnet,**
**daß** mittig in dem Folienformkörper (7) innerhalb des Kranzes von Befestigungsnoppen (9) eine Handhabe (11) zum manuellen Abziehen des Folienformkörpers (7) nach Gebrauch von der Leichtmetallfelge (2) angeformt ist.

3. Abdeckung nach Anspruch 2,
**dadurch gekennzeichnet,**
**daß** die Handhabe (11) in Form eines mittig von dem Folienformkörper (7) abragenden Domes ausgebildet ist.

4. Abdeckung nach Anspruch 1,
**dadurch gekennzeichnet,**
**daß** die vom Folienformkörper abragenden Noppen (9') zylindrisch ausgebildet und im Durchmesser an zylindrische Ansenkungen (10) der Leichtmetallfelgen angepaßt sind, derart, daß sie zusätzlich mit den Ansenkungen (10) verrastbar sind.

5. Abdeckung nach Anspruch 1,
**dadurch gekennzeichnet,**
**daß** im radialen Bereich des Füllventiles (12) des Fahrzeugrades (1) eine ringförmige, nach außen gewölbte, das Füllventil (12) übergreifende Rille (13) in den Folienformkörper (7) eingeformt ist.

6. Abdeckung nach Anspruch 1,
**dadurch gekennzeichnet,**
**daß** zumindest im zentrumsnahen Bereich des Folienformkörpers (7), d.h nahe bei den Befestigungsnoppen (9), der Folienformkörper (7) durch eingeformte peripher und radial verlaufende Versteifungssicken (14) ausgesteift ist.

7. Abdeckung nach Anspruch 5 und 6,
**dadurch gekennzeichnet,**
**daß** in einem radialen Bereich zwischen den Befestigungsnoppen (9) bzw. den Versteifungssicken (14) einerseits und der das Füllventil (12) übergreifende Rille (13) andererseits mehrere konzentrisch verlaufende, radial unmittelbar benachbarte und der Wandung einen sinusähnlichen oder zickzackförmigen Querschnittsverlauf gebende Ringsicken (18) in den Folienformkörper (7) eingeformt sind.

8. Abdeckung nach Anspruch 1,,
**dadurch gekennzeichnet,**
**daß** der Folienformkörper (7) aus einer Hartfolie aus thermoplastischem Kunststoff besteht.

9. Abdeckung nach Anspruch 1,,
**dadurch gekennzeichnet,**
**daß** der Folienformkörper (7) aus Recyclat-Kunststoff besteht.

10. Abdeckung nach Anspruch 1,,
**dadurch gekennzeichnet,**
**daß** der Folienformkörper (7) aus einer Kunststoff-Hartfolie mit einer Stärke (s) von 0,3 bis 1,5 mm, vorzugsweise etwa 0,5 mm besteht.

11. Abdeckung nach Anspruch 1,
**dadurch gekennzeichnet,**
**daß** der Folienformkörper (7) aus einer Kunststoff-Folie aus Polypropylen (PP), aus Polystyrol (PS) oder aus Polyethylenterephthalat (PET) besteht.

## Claims

1. Masking of vehicle wheels (1) with light alloy rims (2) for lengthy journeys, whereby the face of the vehicle wheels directed towards the outside is covered by a closed plastics film attached to the wheel, with an inherently stiff, rounded, closed film-moulded body, which is arranged to provide surface coverage of the external face of the light alloy rim and beyond the rim horn (8) and is centrally arranged on the wheel,
**characterised in that**
the film-moulded body (7) is pushed tightly onto the wheel screws (15) or nuts and/or pushed into the corresponding recesses (10) by means of fixing nubs (9) with a base moulded therein, the number, position and shape of which are adapted to the countersunk wheel screws or nuts themselves or recesses (10) provided for same in the rims, said fixing nubs adapted to the heads or nuts of the wheel screws (15) and mountable thereon respectively being provided with inside-out redrawn pieces (19), which are moulded into the base of the nubs (9'), projecting out from the moulded-film body towards the vehicle wheel, and sit inside the nub (9').

2. Masking as claimed in claim 1,
**characterised in that**
a grip (11) is moulded in the centre of the film-moulded body (7) inside of the ring of fixing nubs (9) for manually removing the film-moulded body (7) after use of the light alloy rim (2).

3. Masking as claimed in claim 2,
**characterised in that**
the grip (11) is designed in the form of a dome projecting out from the centre of the film-moulded body (7).

4. Masking as claimed in claim 1,
**characterised in that**
the nubs (9') projecting out from the film-moulded body are of a cylindrical design and of a diameter adapted to cylindrical recesses (10) in the light alloy rims so that they can additionally locate in the recesses (10).

5. Masking as claimed in claim 1,
**characterised in that,**
in the radial region of the filler valve (12) of the vehicle wheel (1), an annular, outwardly cambered ridge (13) spanning the filler valve (12) is moulded into the film-moulded body (7).

6. Masking as claimed in claim 1,
**characterised in that,**
at least the region close to the centre of the film-moulded body (7), i.e. close to the fixing nubs (9),the film-moulded body (7) is reinforced by moulded, peripherally and radially extending reinforcing beads (14).

7. Masking as claimed in claim 5 and 6,
**characterised in that,**
in a radial region between the fixing nubs (9) and stiffening beads (14) on the one hand and the ridge (13) spanning the filler valve (12) on the other hand, a plurality of concentrically disposed, radially adjacent annular beads (18) are moulded into the film-moulded body (7), imparting a sinusoidal or zig-zag-shaped cross section to the wall.

8. Masking as claimed in claim 1,
**characterised in that**
the film-moulded body (7) consists of a hard film made from a thermoplastic synthetic material.

9. Masking as claimed in claim 1,
**characterisedin that,**
the film-moulded body (7) consists of recycled synthetic material.

10. Masking as claimed in claim 1,
**characterised in that,**
the film-moulded body (7) consists of a synthetic hard film with a thickness (s) of 0.3 to 1.5 mm, preferably approximately 0.5 mm.

11. Masking as claimed in claim 1,
**characterised in that,**
the film-moulded body (7) consists of a synthetic film of polypropylene (PP)m polystyrene (PS) or polyethylene terephthalate (PET).

## Revendications

1. Habillage de roues de véhicule (1) avec des jantes en alliage léger (2) pendant un transport prolongé, dans lequel le côté dirigé vers l'extérieur (3) des roues du véhicule est recouvert d'une feuille de plastique fermée fixée sur la roue, avec un moulage de feuille fermé, rond, ayant une rigidité propre, qui empiète sur le côté extérieur de la jante en alliage léger jusqu'au rebord de la jante (8) en recouvrant la surface et qui est disposé au centré de la roue du véhicule,
**caractérisé en ce que** le moulage de feuille (7) est engagé par pression, sous précontrainte, sur les boulons de la roue (15) ou sur les écrous de la roue au moyen de noppes de fixation (9) avec un fond moulées dedans, qui, selon leur quantité, leur position et leur forme, sont adaptées aux boulons ou aux écrous de la roue eux-mêmes noyés ou aux creux (10) prévus pour cela dans les jantes, et/ou enfoncé dans les creux correspondants (10), moyennant quoi les noppes de fixation adaptées aux têtes ou aux écrous des boulons de la roue (15) et engageables par pression sur ces derniers ont chacune la forme d'une pièce emboutie par retournement (19) qui sont formées à partir du fond des noppes (9') saillant du moulage de feuille en direction de la roue du véhicule et qui se trouvent à l'intérieur de la noppe (9').

2. Habillage selon la revendication 1, **caractérisé en ce que**, au milieu du moulage de feuille (7) à l'intérieur de la couronne des noppes de fixation (9) une manette (11) est formée pour retirer manuellement le moulage de feuille (7) de la jante d'alliage léger (2) après utilisation.

3. Habillage selon la revendication 2, **caractérisé en ce que** la manette (11) est formée comme un dôme saillant au milieu du moulage de feuille (7).

4. Habillage selon la revendication 1, **caractérisé en ce que** les noppes (9') saillant du moulage de feuille sont de forme cylindrique et **en ce que** leur diamètre est adapté à des creux cylindriques (10) des jantes en alliage léger de manière à s'enclencher, en plus, dans les creux (10).

5. Habillage selon la revendication 1, **caractérisé en ce que**, dans la zone radiale de la soupape de remplissage (12) de la roue du véhicule (1), une rainure (13) annulaire, bombée vers l'extérieur, empiétant sur la soupape de remplissage (13) est moulée dans le moulage de feuille (7).

6. Habillage selon la revendication 1, **caractérisé en ce que**, au moins dans la zone près du centre du moulage de feuille (7), c'est-à-dire près des noppes de fixation (9), le moulage de feuille (7) est raidi par des moulures raidisseuses (14) moulées à la périphérie et s'étendant dans le sens radial.

7. Habillage selon la revendication 5 et 6, **caractérisé en ce que**, dans une zone radiale entre les noppes de fixation (9) ou les moulures raidisseuses (14), d'une part, et la rainure (13) empiétant sur la soupape de remplissage (13), d'autre part, plusieurs moulures annulaires (18), s'étendant concentriquement, immédiatement contiguës dans le sens radial et donnant à la paroi un tracé transversal d'aspect sinusoïdal ou en zigzag, sont moulées dans le moulage de feuille (7).

8. Habillage selon la revendication 1, **caractérisé en ce que** le moulage de feuille (7) est fait d'une feuille dure en plastique thermoplastique.

9. Habillage selon la revendication 1, **caractérisé en ce que** le moulage de feuille (7) est fait de plastique re recyclage.

10. Habillage selon la revendication 1, **caractérisé en ce que** le moulage de feuille (7) est fait d'une feuille dure en plastique ayant une épaisseur (s) comprise entre 0,3 et 1,5 mm, de préférence d'environ 0,5 mm.

11. Habillage selon la revendication 1, **caractérisé en ce que** le moulage de feuille (7) est fait d'une feuille en plastique en polypropylène (PP), en polystyrène (PS) ou en polyéthylènetéréphtalate (PET).
